# EUROPÄISCHE PATENTSCHRIFT

(11) **EP 4 193 825 B1**
(45) Veröffentlichungstag und Bekanntmachung des Hinweises auf die Patenterteilung: **15.05.2024**
(21) Anmeldenummer: 22202733.6
(22) Anmeldetag: 20.10.2022
(51) Int. Cl.: A01D 57/02, A01D 80/02

(54) **HASPEL**
REEL
RABATTEUR

(30) Priorität: 09.12.2021 DE 102021132420
(43) Veröffentlichungstag der Anmeldung: 14.06.2023
(73) Patentinhaber: CLAAS Selbstfahrende Erntemaschinen GmbH, 33428 Harsewinkel (DE)
(72) Erfinder: NIERMANN, Martin, 33428 Harsewinkel (DE); DUDLER, Heribert, 33428 Harsewinkel (DE); LIEDMEIER, Stefan, 49479 Ibbenbüren (DE); HILDEBRANDT, Eric, 25364 Westerhorn (DE); MEYER ZU HÖRSTE, Kai, 49196 Bad Laer (DE)
(74) Vertreter: CLAAS Gruppe

(56) Entgegenhaltungen:
- EP-A1- 1 716 740
- EP-A1- 2 798 941
- DE-A1-102011 118 315
- US-A- 4 016 710

## Beschreibung

Die Erfindung betrifft eine Haspel für ein Schneidwerk umfassend ein Haspeltragrohr mit darauf angeordneten Haspelsternen, an deren Sternarmen sich parallel zu dem Haspeltragrohr erstreckende Zinkenstangen angeordnet sind.

Schneidwerke weisen ein Gehäuse sowie eine langgestreckte, sich zwischen Seitenteilen des Gehäuses erstreckende Querfördereinrichtung auf, mittels der Pflanzen hin zu einem mittigen Bereich des Schneidwerks förderbar sind. Ferner umfasst das Schneidwerk mindestens eine Schneideinrichtung, mittels der zu erntende Pflanzen schneidbar sind. Haspeln finden an Schneidwerken Verwendung, um stehendes Erntegut dem Messerbalken und der Querfördereinrichtung zuzuführen. Hierfür ist die Haspel um eine sich entlang des Haspeltragrohrs orientierte Rotationsachse drehbar gelagert und besitzt eine Vielzahl von parallel zu dem Haspeltragrohr und sich über dessen länge erstreckende Zinkenstangen. Die Zinkenstangen umfassen jeweils eine Vielzahl von Haspelzinken. Zusätzlich sind die Zinkenstangen jeweils um ihre Wellenachse drehbeweglich gelagert, sodass der Winkel der Haspelzinken einstellbar ist. Die Haspelzinken werden bei einer Rotation der Haspel von einem Stellmechanismus entlang einer komplexen Bahn geführt, wodurch eine optimierte Zuführung der Pflanzen hin zu dem Messerbalken und der Querfördereinrichtung gewährleistet ist. Die Haspelzinken benachbarter Zinkenstangen sind versetzt zueinander angeordnet, sodass sich die Kurvenbahnen der Haspelzinken benachbarter Zinkenstangen nicht schneiden und ein größerer Wirkbereich von den Haspelzinken erfasst wird.

Um den Ernteprozess zu optimieren, ist die Schneidwerksbreite zur Erfassung der Pflanzen Wesentlich. Die Schneidwerksbreite beschreibt die Erstreckung des Schneidwerks quer zur Fahrtrichtung und beeinflusst maßgeblich die benötigte Zeitdauer eines Erntevorgangs. Im Zuge immer größer werdender Schneidwerksbreiten steigt die Bestrebung das Gesamtgewicht des Schneidwerks und somit auch der Haspel zu minimieren.

Für die Haspel ist die Biegesteifigkeit von großer Wichtigkeit. Ein Durchbiegen der Haspel soll vermieden werden, damit über die Schneidwerksbreite der Förderabstand der Haspelzinken zum Messerbalken gleichmäßig ist. Üblicherweise stellt zur Vermeidung eines Durchbiegens das Haspeltragrohr den biegesteifen Träger dar und trägt somit ca. ein Drittel zum Gesamtgewicht der Haspel bei. Das hohe Gewicht des Haspeltragrohrs ist als nachteilig anzusehen.

Eine Haspel ist in der DE 10 2011 118 315 A1 offenbart. Die DE 10 2011 118 315 A1 macht es sich zur Aufgabe, das Gewicht der Haspel zu reduzieren. Hierfür wird eine gezielte Verstärkung der endseitig an dem Haspeltragrohr angeordneten Haspelsterne vorgeschlagen. Nachteilig ist jedoch, dass endseitig am Haspeltragrohr üblicherweise der Stellmechanismus zum Einstellen der Position der Haspelzinken vorgesehen ist und somit nur wenig Raum für verstärkt ausgeführte Haspelsterne zur Verfügung steht.

Es ist Aufgabe der Erfindung, die beschriebenen Nachteile des Standes der Technik zu vermeiden und insbesondere eine biegesteifere Haspel mit verringertem Gewicht des Haspelrohrs zu schaffen.

Diese Aufgabe wird erfindungsgemäß durch die kennzeichnenden Merkmale des Anspruchs 1 gelöst.

Gemäß dem Anspruch 1 wird eine Haspel für ein Schneidwerk umfassend ein Haspeltragrohr mit darauf angeordneten Haspelsternen, an deren Sternarmen sich parallel zu dem Haspeltragrohr erstreckende Zinkenstangen angeordnet sind, vorgeschlagen, wobei benachbarte Sternarme zumindest eines Haspelsterns zumindest abschnittsweise spurversetzt zueinander angeordnet sind.

Die Erfindung hat viele Vorteile. Auf den Zinkenstangen befinden sich eine Vielzahl von Haspelzinken. Die Haspelzinken benachbarter Zinkenstangen sind spurversetzt zueinander angeordnet. Eine spurversetzte Anordnung der Sternarme eines Haspelsterns ermöglicht es, dass die jeweiligen Sternarme des Haspelsterns den gleichen Abstand zu den jeweiligen Haspelzinken der dem jeweiligen Sternarm zugeordneten Zinkenstange aufweisen. Hierdurch können die Sternarme eines Haspelsterns breiter und somit Biegesteifer ausgeführt sein, ohne dass der Bewegungsradius der Haspelzinken eingeschränkt ist. Die auf den Zinkenstangen befindlichen Haspelzinken können kollisionsfrei in die Haspel eingreifen. Durch die Anordnung der Haspelsterne mit spurversetzten Sternarmen wird eine biegesteifere Ausführung der gesamten Haspel ermöglicht, sodass die auf das Haspeltragrohrwirkenden Momente reduziert sind und somit das Gewicht des Haspeltragrohrs verringerbar ist. Als abschnittsweise spurversetzt ist hier und vorzugsweise zu verstehen, dass der sich bei einer Rotationsbewegung des Haspeltragrohrs ergebende Hüllkreis eines Sternarms zumindest abschnittsweise axial versetzt zu dem Hüllkreis der benachbarten Sternarme ist.

Vorzugsweise können die benachbarten Sternarme des zumindest einen Haspelsterns zumindest endseitig in einem den Zinkenstangen zugewandten Bereich spurversetzt zueinander angeordnet sein.

In einer vorteilhaften Weiterbildung ist vorgesehen, dass die Sternarme der vorletzten Haspelsterne spurversetzt zueinander angeordnet sind. Untersuchungen haben gezeigt, dass eine derartige Anordnung besonders vorteilhaft zur Erhöhung der Biegesteifigkeit der Haspel ist. Ein weiterer Vorteil einer zu den Stirnseiten beabstandeten Positionierung der spurversetzten Sternarme ergibt sich dadurch, dass an den Stirnseiten der Haspel die Stellmechanik zur Führung der Haspelzinken entlang einer Kurvenbahn angeordnet ist und somit an den Stirnseiten wenig Bauraum zur Anordnung spurversetzter Sternarme zur Verfügung steht.

In einer weiteren vorteilhaften Weiterbildung können die zumindest abschnittsweise spurversetzt zueinander angeordneten Sternarme verstärkt ausgeführt sein, wobei vorzugsweise die verstärkt ausgeführten Sternarme gegenüber den Sternarmen der weiteren Haspelsterne, die insbesondere spurgleich zueinander angeordnete Sternarme aufweisen, biegesteifer ausgeführt sind. Durch die verstärkte Ausführung der Sternarme wird die Übertragung von Momenten und Kräften zwischen den Zinkenstangen und dem Haspeltragrohr begünstigt. Zur Gewichtsreduzierung der Haspel ist es bevorzugt, dass ausschließlich zwei auf dem Haspeltragrohr angeordnete Haspelsterne spurversetzt und verstärkt ausgeführte Sternarme aufweisen.

Vorzugsweise können zur Verstärkung die Sternarme eine breitere Erstreckung als die Sternarme der weiteren Haspelsterne, die insbesondere mit spurgleich zueinander angeordneten Sternarmen ausgeführt sind, aufweisen. Mit anderen Worten erstrecken sich die verstärkt ausgeführten Sternarme in axialer Richtung des Haspeltragrohrs über eine längere Strecke als die spurgleich zueinander angeordneten Sternarme.

In einer vorteilhaften Ausgestaltung können zur Verstärkung die Sternarme als doppel T-Träger ausgeführt sein, wobei vorzugsweise der jeweilige doppel T-Träger einen dem Haspeltragrohr zugewandten trapezförmigen Bereich und einen sich hieran in radialer Richtung des Haspeltragrohrs anschließenden im Wesentlichen dreieckförmigen Bereich umfasst, wobei der dreieckförmige Bereich schmaler als der trapezförmige Bereich ausgebildet ist. Eine derartige Ausgestaltung ist besonders vorteilhaft zur Übertragung von Kräften und Momenten zwischen den Zinkenstangen und dem Haspeltragrohr, da die wirkenden Momente verstärkt in dem trapezförmigen Bereich wirken, der breiter und somit biegesteifer als der dreieckförmige Bereich ausgeführt ist. Der schmalere im Wesentlichen dreieckförmige Bereich ist benachbart zum Hüllkreis der Haspelzinken, wobei durch die schmalere Ausführung dieses Bereichs eine Kollision mit den Haspelzinken vermeidbar ist.

Eine weitere vorteilhafte Ausgestaltung sieht vor, dass die Zinkenstangen durch die zumindest abschnittsweise spurversetzt zueinander angeordneten Sternarme mit einer Zugkraft beaufschlagt sind, wobei vorzugsweise die jeweils vorletzten Haspelsterne jeweils zumindest abschnittsweise spurversetzt zueinander angeordnete Sternarme aufweisen und die Zinkenstangen zwischen diesen vorletzten Haspelsternen verspannt sind. Die Verspannung der Zinkenstangen zwischen den Haspelsternen, sodass diese vorzugsweise im Betriebszustand ausschließlich Zugkräfte aufnehmen und somit dauerhaft mit einer Zugkraft beaufschlagt sind, ermöglicht es die Biegesteifigkeit der Haspel zu erhöhen. Zugleich kann das Gewicht des Haspeltragrohrs reduziert werden, sodass das Gesamtgewicht der Haspel abnimmt.

Besonders bevorzugt ist es, wenn die Zinkenstangen mittels Axiallagern an den Sternarmen gelagert sind, wobei vorzugsweise die Axiallager verschiebbeweglich auf den Zinkenstangen angeordnet sind und die Axiallager mittels zumindest einer Feststelleinrichtung, insbesondere einer Klemmutter in ihrer Position festgesetzt sind. Hierdurch sind die Zinkenstangen auf einfache Art und Weise mit einer Zugkraft beaufschlagbar.

Insbesondere können die Zinkenstangen eine Vielzahl von Haspelzinken umfassen, wobei die Haspelzinken benachbarter Zinkenstangen spurversetzt zueinander angeordnet sind.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: Eine Seitenansicht des vorderen Bereichs eines Mähdreschers mit einem daran angeordneten Schneidwerk;
- Figur 2: Eine schematische Ansicht eines Haspelsterns;
- Figur 3: Eine Frontansicht einer Haspel;
- Fig. 4: Ein Axiallager mit einer Klemmutter

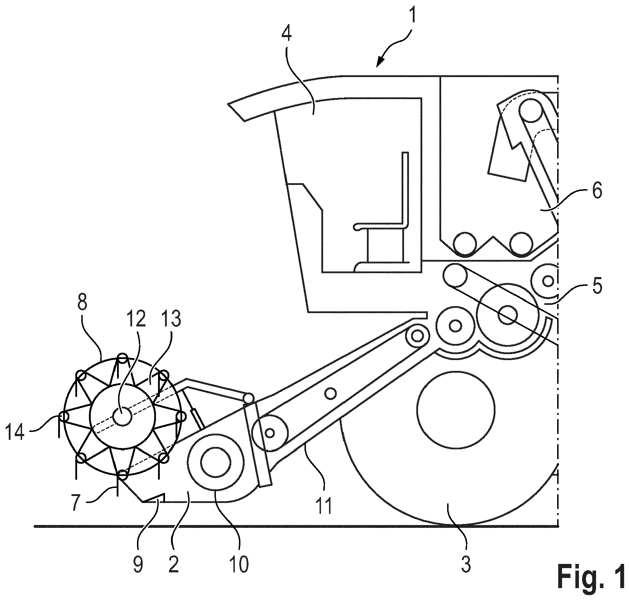

Bei einem in der Fig. 1 teilweise dargestellten Mähdrescher 1 mit Schneidwerk 2, Triebrädern 3, Fahrerkabine 4, Drescheinrichtung 5 und Korntank 6 wird das Erntegut von den Haspelzinken 7 der Haspel 8 erfasst und zum Messerbalken 9 geleitet und von diesem abgeschnitten. Das geschnittene Gut wird anschließend von der Einzugsschnecke 10 kontinuierlich zur Mitte gefördert und dort an den Schrägförderer 11 übergeben, der das Erntegut der Drescheinrichtung 5 zuführt. Die Haspel 8 ist in horizontaler und vertikaler Richtung einstellbar und unterstützt die gleichmäßige Erntegutförderung. Sie besteht aus einem axial angeordneten und angetriebenen Haspeltragrohr 12, an der in Abständen Haspelsterne 13 befestigt sind. An deren Umfang sind mehrere, über die gesamte Breite der Haspel 8 durchgehende Zinkenstangen 14 angeordnet. An diesen sind mit Abstand gesteuerte Haspelzinken 7 befestigt, die als Einfach- oder Doppelzinken ausgebildet sind und aus federndem Stahl oder Kunststoff hergestellt sind. Die Zinkenstrangen 14 bestehen aus einem gewalzten oder stranggepressten Hohlprofil.

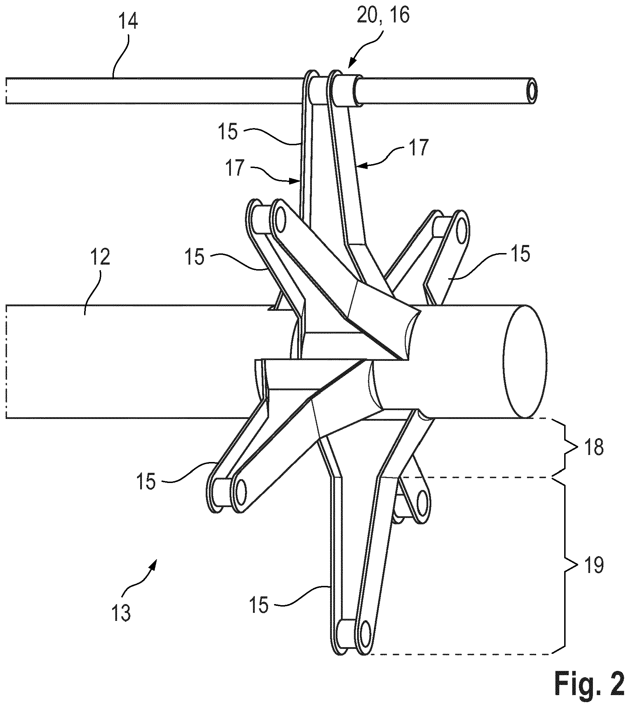

In Figur 2 ist eine schematische Ansicht eines Haspelsterns 13 dargestellt. Der Haspelstern 13 umfasst sechs Sternarme 15. Die Sternarme 15 sind in Umfangsrichtung des Haspeltragrohrs 12 hintereinander auf diesem angeordnet und erstrecken sich speichenförmig in radialer Richtung. Auf dem Haspeltragrohr 12 kann eine ringförmige Nabe (nicht gezeigt) angeordnet sein, wobei die Sternarme 15 radial außenseitig ortsfest auf der Nabe befestigt sind. Die Sternarme 15 sind vorzugsweise mit der Nabe oder unmittelbar mit dem Haspeltragrohr 12 verschraubt, sodass diese bei einer Beschädigung einzeln austauschbar sind. Die benachbarten Sternarme 15 des Haspelsterns 13 sind zueinander spurversetzt angeordnet. Als benachbarte Sternarme 15 sind hier zwei in Umfangsrichtung des Haspeltragrohrs 12 aufeinanderfolgende Sternarme 15 eines Haspelsterns 13 zu verstehen. Als spurversetzt ist hier und vorzugsweise zu verstehen, dass der sich bei einer Rotationsbewegung des Haspeltragrohrs 12 ergebende Hüllkreis eines Sternarms 15 axial versetzt zu dem Hüllkreis der benachbarten Sternarme 15 ist. In einer ersten Ausführungsform sind die benachbarten Sternarme 15 eines Haspelsterns 13 abschnittsweise in ihrem den Zinkenstangen 14 zugewandten Bereich spurversetzt zueinander angeordnet. In einer alternativen und in Fig. 2 gezeigten Ausführungsform sind die benachbarten Sternarme 15 eines Haspelsterns 13 in ihrer gesamten Erstreckung spurversetzt zueinander angeordnet.

Die spurversetzt zueinander angeordneten Sternarme 15 sind verstärkt ausgeführt. Diese verstärkt ausgeführten Sternarme 15 sind biegesteifer als die spurgleich angeordneten Sternarmen 15 der weiteren Haspelsterne 13. Zur Verstärkung der Sternarme 15 und insbesondere zur Erhöhung deren Biegesteifigkeit, weisen die spurversetzt zueinander angeordneten Sternarme 15 eine breitere Erstreckung in axialer Richtung des Haspeltragrohrs 12 auf als die Haspelsterne 13 mit spurgleich zueinander angeordneten Sternarmen 15. Durch die breitere Erstreckung der Sternarme 15 sind Momente und Kräfte besser von den Zinkenstangen 14 auf das Haspeltragrohr 12 übertragbar. Begünstigt wird dies ebenfalls dadurch, dass die verstärkt ausgeführten Sternarme 15 als doppel T-Träger ausgebildet sind. Die T-förmigen Stirnseiten 17 sind in axialer Richtung des Haspeltragrohrs 12 ausgerichtet.

Die verstärkt ausgeführten Sternarme 15 umfassen einen dem Haspeltragrohr 12 zugewandten breiten trapezförmigen Bereich 18 und einen schmaleren im Wesentlichen dreieckförmigen Bereich 19, der sich radial außenseitig an den trapezförmigen Bereich 18 anschließt. Die breiteste Seite des trapezförmigen Bereichs 18 ist dem Haspeltragrohr 12 zugewandt. Hierdurch wird eine Kraftübertragung von den Sternarmen 15 auf das Haspeltragrohr 12 begünstigt. Die auf die Sternarme 15 wirkenden Momente sind in dem breiteren, trapezförmigen Bereich größer als in dem schmaleren dreieckförmigen Bereich, sodass die Ausführung der Sternarme 15 hinsichtlich der Kraft- und Momentübertragung zwischen den Zinkenstangen 14 und dem Haspeltragrohr 12 besonders vorteilhaft ist.

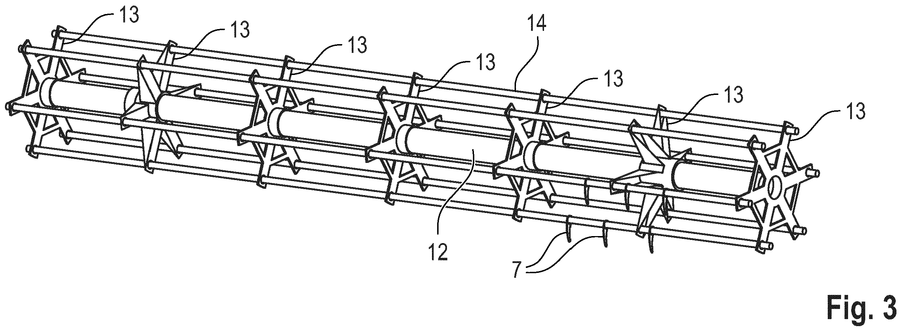

In Figur 3 ist eine Haspel 8 schematisch in einer Frontansicht dargestellt. Die dargestellte Haspel 8 umfasst sieben Haspelsterne 13. Hier und vorzugsweise umfassen die vorletzten Haspelsterne 13 benachbarte Sternarme 15, die spurversetzt zueinander angeordnet sind, wobei die weiteren Haspelsterne 13 mit spurgleich zueinander angeordneten Sternarmen 15 ausgebildet sind. Zur Erhöhung der Biegesteifigkeit der Haspel 8 sind die spurversetzt zueinander angeordneten Sternarme 15 mit einer Zugkraft beaufschlagt. Hierfür sind die Zinkenstangen 14 zwischen den beiden vorletzten Haspelsternen 13 verspannt. Untersuchungen haben gezeigt, dass eine derartige Anordnung der Haspelsterne 13 besonders vorteilhaft für die Biegesteifigkeit der Haspel 8 ist. Die Sternarme 15 der vorletzten Haspelsterne 13 sind verstärkt ausgeführt, sodass diese aufgrund ihrer erhöhten Biegesteifigkeit zur Aufnahme der hohen wirkenden Zugkräfte ausgebildet sind.

Auf den Zinkenstangen 14 sind eine Mehrzahl von in Fig. 3 exemplarisch angedeuteten und an sich bekannten Haspelzinken 7 angeordnet. Die Haspelzinken 7 von in Umfangrichtung der

Haspel 8 benachbarter Zinkenstangen 14 sind spurversetzt zueinander angeordnet, sodass die Hüllkurven der Haspelzinken 7 benachbarter Zinkenstangen 14 sich nicht überlagern und der Wirkbereich der Haspelzinken 7 erweitert ist. Die Haspelzinken 7 werden während einer Rotation der Haspel 8 entlang einer komplexen Bahnkurve geführt, um eine optimale Zuführung der Pflanzen hin zu dem Messerbalken 9 zu erreichen. Hierbei greifen die Haspelzinken 7 üblicherweise in die Haspel ein. Dadurch, dass die Sternarme 15 der vorletzten Haspelsterne 13 spurversetzt zueinander angeordnet sind, können diese breiter ausgeführt werden, ohne dass diese mit den Haspelzinken 7 kollidieren. Mit anderen Worten ist die spurversetzte Anordnung der verstärkt ausgeführten Sternarme 15 eines Haspelsterns 13 an den Spurversatz der Haspelzinken 7 angepasst.

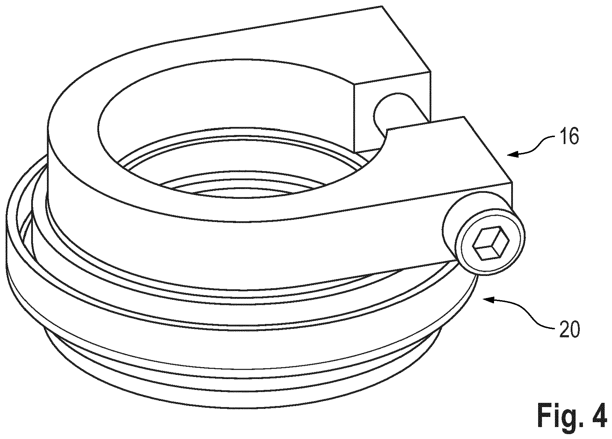

In Figur 4 ist ein Axiallager 20 mit einer an einer Stirnseite des Axiallagers 20 befindlichen Klemmutter 16 dargestellt. Hier und vorzugsweise sind die Zinkenstangen 14 mittels Axiallagern 20 in den spurversetzt zueinander angeordneten Sternarmen 15 gelagert. Die Axiallager 20 sind hierfür verschiebbeweglich auf den Zinkenstangen 14 angeordnet und mittels der Klemmutter 16 in ihrer Position fixiert. Dies ermöglicht auf einfache Art und Weise die Sternarme 15 in einer Position zu fixieren, in der eine Zugkraft von dem jeweiligen Sternarm 15 auf die jeweilige Zinkenstange 14 wirkt.

### Bezugszeichenliste:

- 1: Mähdrescher
- 2: Schneidwerk
- 3: Triebrad
- 4: Fahrerkabine
- 5: Drescheinrichtung
- 6: Korntank
- 7: Haspelzinken
- 8: Haspel
- 9: Messerbalken
- 10: Einzugsschnecke
- 11: Schrägförderer
- 12: Haspeltragrohr
- 13: Haspelstern
- 14: Zinkenstange
- 15: Sternarm
- 16: Klemmutter
- 17: Stirnseite
- 18: Trapezförmiger Bereich
- 19: Dreieckförmiger Bereich
- 20: Axiallager

## Patentansprüche

1. Haspel (8) für ein Schneidwerk (2) umfassend ein Haspeltragrohr (12) mit darauf angeordneten Haspelsternen (13), an deren Sternarmen (15) sich parallel zu dem Haspeltragrohr (12) erstreckende Zinkenstangen (14) angeordnet sind,
**dadurch gekennzeichnet, dass**
benachbarte Sternarme (15) zumindest eines Haspelsterns (13) zumindest abschnittsweise spurversetzt zueinander angeordnet sind.

2. Haspel (8) nach Anspruch 1, **dadurch gekennzeichnet, dass** die benachbarten Sternarme (15) des zumindest einen Haspelsterns (13) zumindest endseitig in einem den Zinkenstangen (14) zugewandten Bereich spurversetzt zueinander angeordnet sind.

3. Haspel (8) nach einem der Ansprüche 1 bis 2, **dadurch gekennzeichnet, dass** die Sternarme (15) der vorletzten Haspelsterne (13) spurversetzt zueinander angeordnet sind.

4. Haspel (8) nach einem der Ansprüche 1 bis 3, **dadurch gekennzeichnet, dass** die zumindest abschnittsweise spurversetzt zueinander angeordneten Sternarme (15) verstärkt ausgeführt sind, wobei vorzugsweise die verstärkt ausgeführten Sternarme (15) gegenüber den Sternarmen (15) der weiteren Haspelsterne (13), die insbesondere spurgleich zueinander angeordnete Sternarme (15) aufweisen, biegesteifer ausgeführt sind.

5. Haspel (8) nach Anspruch 4, **dadurch gekennzeichnet, dass** zur Verstärkung die zumindest abschnittsweise spurversetzt zueinander angeordneten Sternarme (15) eine breitere Erstreckung als die Sternarme (15) der weiteren Haspelsterne (13), die insbesondere mit spurgleich zueinander angeordneten Sternarmen (15) ausgeführt sind, aufweisen.

6. Haspel (8) nach einem der Ansprüche 4 bis 5, **dadurch gekennzeichnet, dass** zur Verstärkung die zumindest abschnittsweise spurversetzt zueinander angeordneten Sternarme (15) als doppel T-Träger ausgeführt sind, wobei vorzugsweise der jeweilige doppel T-Träger einen dem Haspeltragrohr (12) zugewandten trapezförmigen Bereich (18) und einen sich hieran in radialer Richtung des Haspeltragrohrs (12) anschließenden im Wesentlichen dreieckförmigen Bereich (19) umfasst, wobei der dreieckförmige Bereich (19) schmaler als der trapezförmige Bereich (18) ausgebildet ist.

7. Haspel (8) nach einem der Ansprüche 1 bis 6, **dadurch gekennzeichnet, dass** die Zinkenstangen (14) durch die zumindest abschnittsweise spurversetzt zueinander angeordneten Sternarme (15) mit einer Zugkraft beaufschlagt sind, wobei vorzugsweise die jeweils vorletzten Haspelsterne (13) jeweils zumindest abschnittsweise spurversetzt zueinander angeordnete Sternarme (15) aufweisen und die Zinkenstangen (14) zwischen diesen vorletzten Haspelsternen (13) verspannt sind.

8. Haspel (8) nach einem der Ansprüche 1 bis 7, **dadurch gekennzeichnet, dass** die Zinkenstangen (14) mittels Axiallagern (20) an den Sternarmen (15) gelagert sind, wobei vorzugsweise die Axiallager (20) verschiebbeweglich auf den Zinkenstangen (14) angeordnet sind und die Axiallager (20) mittels zumindest einer Feststelleinrichtung, insbesondere einer Klemmutter (16) in ihrer Position festgesetzt sind.

9. Haspel (8) nach einem der Ansprüche 1 bis 8, **dadurch gekennzeichnet, dass** die Zinkenstangen (14) eine Vielzahl von Haspelzinken (7) umfassen, wobei die Haspelzinken (7) benachbarter Zinkenstangen (14) spurversetzt zueinander angeordnet sind.

## Claims

1. A reel (8) for a cutting mechanism (2) comprising a reel support tube (12) with reel stars (13) arranged thereon, on the star arms (15) of which tine rods (14) extending parallel to the reel support tube (12) are arranged,
**characterised in that**
neighbouring star arms (15) of at least one reel star (13) are arranged offset from one another at least in sections.

2. Reel (8) according to claim 1, **characterised in that** the adjacent star arms (15) of the at least one reel star (13) are arranged offset in relation to one another at least at the ends in a region facing the tine rods (14).

3. Reel (8) according to one of claims 1 to 2, **characterised in that** the star arms (15) of the penultimate reel stars (13) are arranged offset in relation to one another.

4. Reel (8) according to one of claims 1 to 3, **characterised in that** the star arms (15), which are arranged offset to the track relative to one another at least in sections, are of a reinforced design, the reinforced star arms (15) preferably being of a more rigid design than the star arms (15) of the other reel stars (13), which in particular have star arms (15) arranged with the same track relative to one another.

5. Reel (8) according to claim 4, **characterised in that**, for reinforcement, the star arms (15), which are arranged offset to one another at least in sections, have a wider extension than the star arms (15) of the further reel stars (13), which are designed in particular with star arms (15) arranged on the same track as one another.

6. Reel (8) according to one of claims 4 to 5, **characterised in that**, for reinforcement, the star arms (15), which are arranged offset to one another at least in sections, are designed as double T-beams, wherein preferably the respective double T-beam comprises a trapezoidal region (18) facing the reel support tube (12) and a substantially triangular region (19) adjoining it in the radial direction of the reel support tube (12), wherein the triangular region (19) is narrower than the trapezoidal region (18).

7. Reel (8) according to one of claims 1 to 6, **characterised in that** the tine rods (14) are subjected to a tensile force by the star arms (15) which are arranged offset from one another at least in sections, wherein preferably the respective penultimate reel stars (13) each have star arms (15) arranged offset from one another at least in sections and the tine rods (14) are braced between these penultimate reel stars (13).

8. Reel (8) according to one of claims 1 to 7, **characterised in that** the tine rods (14) are mounted on the star arms (15) by means of axial bearings (20), the axial bearings (20) preferably being arranged on the tine rods (14) so as to be displaceable and the axial bearings (20) being fixed in their position by means of at least one locking device, in particular a clamping nut (16).

9. Reel (8) according to one of claims 1 to 8, **characterised in that** the tine bars (14) comprise a plurality of reel tines (7), wherein the reel tines (7) of adjacent tine bars (14) are arranged offset in relation to one another.

## Revendications

1. Rabatteur (8) destiné à un tablier de coupe (2), comprenant un tube support de rabatteur (12) sur lequel sont disposées des étoiles de rabatteur (13) dont les branches d'étoile (15) portent des tiges porte-doigts (14) qui s'étendent parallèlement au tube support de rabatteur (12), **caractérisé en ce que** des branches d'étoile (15) voisines d'au moins une étoile de rabatteur (13) sont disposées au moins par portions avec un décalage de ligne les unes par rapport aux autres.

2. Rabatteur (8) selon la revendication 1, **caractérisé en ce que** les branches d'étoile (15) voisines de l'étoile de rabatteur (13), au nombre d'au moins une, sont disposées avec un décalage de ligne les unes par rapport aux autres, au moins côté extrémités, dans une zone tournée vers les tiges porte-doigts (14).

3. Rabatteur (8) selon l'une des revendications 1 à 2, **caractérisé en ce que** les branches d'étoile (15) des avant-dernières étoiles de rabatteur (13) sont disposées avec un décalage de ligne les unes par rapport aux autres.

4. Rabatteur (8) selon l'une des revendications 1 à 3, **caractérisé en ce que** les branches d'étoile (15), disposées au moins par portions avec un décalage de ligne les unes par rapport aux autres, sont réalisées avec un renfort, sachant que les branches d'étoile (15) à renfort sont de préférence réalisées de manière à être plus rigides en flexion que les branches d'étoile (15) des autres étoiles de rabatteur (14) qui présentent notamment des branches d'étoile (15) disposées en ligne les unes par rapport aux autres.

5. Rabatteur (8) selon la revendication 4, **caractérisé en ce que** pour le renfort, les branches d'étoile (15), qui sont disposées au moins par portions avec un décalage de ligne les unes par rapport aux autres, ont une dimension plus large que les branches d'étoile (15) des autres étoiles de rabatteur (13) qui sont notamment réalisées avec des branches d'étoile (15) disposées en ligne les unes par rapport aux autres.

6. Rabatteur (8) selon l'une des revendications 4 à 5, **caractérisé en ce que** pour le renfort, les branches d'étoile (15), qui sont disposées au moins par portions avec un décalage de ligne les unes par rapport aux autres, sont réalisées sous forme de poutrelles en double T, la poutrelle en double T respective comportant de préférence une partie (18) trapézoïdale tournée vers le tube support de rabatteur (12) et une partie (19) sensiblement triangulaire qui se raccorde à celle-ci dans la direction radiale du tube support de rabatteur (12), la partie (19) triangulaire étant réalisée sous une forme plus étroite que la partie (18) trapézoïdale.

7. Rabatteur (8) selon l'une des revendications 1 à 6, **caractérisé en ce que** les tiges porte-doigts (14) sont sollicitées par une force de traction exercée par les branches d'étoile (15) disposées au moins par portions avec un décalage de ligne les unes par rapport aux autres, sachant que chaque fois les avant-dernières étoiles de rabatteur (13) comportent de préférence respectivement des branches d'étoile (15) disposées au moins par portions avec un décalage de ligne les unes par rapport aux autres, et les tiges porte-doigts (14) sont serrées entre ces avant-dernières étoiles de rabatteur (13).

8. Rabatteur (8) selon l'une des revendications 1 à 7, **caractérisé en ce que** les tiges porte-doigts (14) sont montées au moyen de paliers axiaux (20) sur les branches d'étoile (15), les palier axiaux (20) étant de préférence montés avec possibilité de déplacement en translation sur les tiges porte-doigts (14), et les paliers axiaux (20) étant immobilisés dans leur position à l'aide d'au moins un dispositif d'arrêt, en particulier un écrou de blocage (16).

9. Rabatteur (8) selon l'une des revendications 1 à 8, **caractérisé en ce que** les tiges porte-doigts (14) comportent une pluralité de doigts rabatteurs (7), les doigts rabatteurs (7) de tiges porte-doigts (14) voisines étant disposés avec un décalage de ligne les uns par rapport aux autres.
